# EUROPEAN PATENT APPLICATION

(11) **EP 3 373 324 A1**
(43) Date of publication of application: **12.09.2018**
(21) Application number: 18160283.0
(22) Date of filing: 06.03.2018
(51) Int. Cl.: H01J 49/00, H01J 49/42

(54) **METHODS AND SYSTEMS FOR QUANTITATIVE MASS ANALYSIS**

(30) Priority: 10.03.2017 US 201715455814; 10.03.2017 US 201715455857
(71) Applicant: Thermo Finnigan LLC, San Jose, CA 95134 (US)
(72) Inventor: LI, Linfan, San Jose, CA California 95134 (US); BAILEY, Derek J., San Jose, CA California 95134 (US)
(74) Representative: Boult Wade Tennant LLP

(57) **Abstract**

A method of quantitative mass analysis of precursor species of different mass-to-charge (m/z) ratios from a single or the same ion injection event is disclosed. A plurality of precursor ion species having different respective m/z ratios are introduced into a mass spectrometer at the same time. The precursor ion species are isolated. A first subset of the isolated precursor ions having a first m/z ratio is fragmented and analyzed. A second subset of the isolated precursor ions having a second m/z ratio is fragmented and analyzed. A first mass spectrum is generated for the fragment ions of the first subset of precursor ions, and a second mass spectrum is generated for the fragment ions of the second subset of precursor ions.

## Description

### FIELD OF THE INVENTION

This invention relates to mass spectrometry based quantitative analysis. More specifically, this invention relates to quantitative mass analysis of product ions derived from multiple precursor species of different mass-to-charge (m/z) ratios injected into an ion trap mass analyzer in the same ion injection event.

### BACKGROUND OF THE INVENTION

Conventional methods of quantitative mass analysis using ion trap mass spectrometers require the analyte and corresponding internal standard ions to be injected and analyzed from two time-separated ion injection events. Any fluctuations in the ionization process which occur in between those two ion injection events introduces inaccuracy in the quantitative mass analysis for that particular measurement and subsequently leads to a bigger relative standard deviation (RSD) and uncertainty in such measurements.

What is needed is a quantitative mass analysis method that minimizes or eliminates errors introduced by the fluctuations in the ionization process and improves the uncertainty in the measurement.

### SUMMARY

Embodiments of the present invention provide methods, systems, and apparatuses for quantitative mass analysis using ion trap mass analyzers. In one embodiment of the present invention, a method of operating an ion trap mass analyzer for quantification of analytes in a sample is provided. The analytes may comprise, in various implementations, therapeutic drugs or their metabolites, drugs of abuse or their metabolites, and endogenous substances such as creatinine. The method includes introducing sample ions into the ion trap mass analyzer. The sample ions, which are introduced into the ion trap in a single common ion injection event or multiple common ion injection events, include first precursor ions having a first mass-to-charge ratio (m/z) range and second precursor ions having a second m/z range. The method also includes m/z isolating both the first precursor ions and the second precursor ions such that after the isolation or isolations are effected only ions within the first precursor m/z range and the second precursor m/z range remain in the ion trap, and initially fragmenting (dissociating) the first precursor ions, but not the second precursor ions, to generate first product ions. The method further includes performing a first m/z analysis scan to m/z-sequentially or m/z-selectively eject the first product ions to a detector to acquire a first mass spectrum including the first product ions. The first m/z analysis scan comprises varying at least one operating parameter of the ion trap mass analyzer (for example, the amplitude of the radio-frequency (RF) trapping voltage applied to the ion trap electrodes) from a start point to an endpoint. The endpoint of the first scan is set such that the second precursor ions are retained in the ion trap mass analyzer, rather than being ejected therefrom or dissociated. The method also includes subsequently fragmenting (dissociating) the second precursor ions to generate second product ions and performing a second m/z analysis scan by m/z-sequentially or m/z-selectively ejecting the second product ions to the detector to acquire a second mass spectrum including the second product ions. The second m/z analysis scan also comprises varying at least one operating parameter of the ion trap mass analyzer - for example, the amplitude of the radio-frequency (RF) trapping voltage applied to the ion trap electrodes - from a start point to an endpoint. The amount of the analyte in the sample may be determined using intensities of the product ions in the first mass spectrum and the second mass spectrum. The first product ions in the first product ion m/z spectrum and the second product ions in the second product ion m/z spectrum are derived from precursor ions delivered to the ion trap in one or more common ion injection events.

In one embodiment, the first precursor ions are analyte precursor ions, and the second precursor ions are internal standard precursor ions. In another embodiment, the first precursor ions are internal standard precursor ions, and the second precursor ions are analyte precursor ions.

A multi-notched broadband excitation waveform voltage may be applied to concurrently m/z isolate the first precursor ions and the second precursor ions.

The ions may be fragmented using ion trap type collision-induced dissociation (IT CID). Using a first IT CID step, a first excitation waveform voltage with one or more frequency components may be applied to the ion trap electrodes to produce a corresponding first excitation waveform field superposed on the ion confinement field or fields of the ion trap. This first excitation waveform field couples to a frequency component of the unforced or natural oscillatory motion of the first precursor ions in the trapping field, causing the first precursor ions to pick up kinetic energy from the excitation waveform field and undergo energetic collisions with molecules of a background gas causing dissociation of the first precursor ions to produce first product ions. The first excitation waveform field couples sufficiently weakly or negligibly to all of the frequency components of the unforced or natural oscillatory motion of the second precursor ions in the trapping field(s) such that the second precursor ions are kinetically excited insufficiently to cause the second precursor ions to remain trapped, intact and negligibly diminished in number.

Also, after the first mass spectrum is acquired, there is a second IT CID step to fragment (dissociate) the second precursor ions which may involve application of a second excitation waveform voltage with one or more frequency components applied to the ion trap electrodes to produce a corresponding second excitation waveform field superposed on the ion confinement field or fields of the ion trap. This second excitation waveform field couples to a frequency component of the unforced or natural oscillatory motion of the second precursor ions in the trapping field and undergo energetic collisions with molecules of a background gas causing dissociation of the second precursor ions to produce second product ions.

In another embodiment of the present invention, an ion trap mass spectrometer adapted for quantitative mass analysis of precursor species of different mass-to-charge (m/z) ratios from the same ion injection event is provided. The mass spectrometer includes an ion source configured so as to generate a plurality of precursor ion species having different respective m/z ratios. The mass spectrometer also includes an ion trap mass analyzer positioned to receive the precursor ions, to isolate the precursor ion species, and to fragment a first subset of the isolated precursor ions having a first m/z ratio range and a second subset of the isolated precursor ions having a second m/z ratio range, wherein these isolated first and second precursor ions are generated collectively at the same time in the ionization source. The ion trap m/z analyzer is operated so as to obtain a first product ion m/z spectrum comprised almost exclusively of ions derived from the first precursor m/z ratio range (dissociation product ions / fragment ions of the first subset of precursor ions) and a second product ion m/z spectrum comprised almost exclusively of ions derived from the second precursor m/z ratio range (dissociation product ions /fragment ions of the second subset of precursor ions).

In another embodiment of the present invention, a method of operating an ion trap mass analyzer for quantification of analytes in a sample is provided. The analytes may comprise, in various implementations, therapeutic drugs or their metabolites, drugs of abuse or their metabolites, and endogenous substances such as creatinine. The method includes introducing sample ions into the ion trap mass analyzer. The sample ions, which are introduced into the ion trap in a single common or multiple common ion injection events, include analyte precursor ions having a first mass-to-charge ratio (m/z) or first m/z range and internal standard precursor ions having a second m/z or second m/z range. The method further includes concurrently m/z isolating both the analyte precursor ions and the internal standard precursor ions such that after the m/z isolation or isolations are effected only ions within the first precursor m/z range and the second precursor m/z range remain in the ion trap. The method also includes fragmenting (dissociating) the analyte precursor ions to generate analyte product ions, and fragmenting the internal standard precursor ions to generate internal standard product ions. The method also includes performing a mass analysis (m/z analysis) scan to mass-sequentially or mass-selectively eject the product ions to a detector to acquire a mass spectrum containing the analyte product ions and the internal standard product ions. The internal standard is selected such that both the internal standard and the analyte has at least one product ion species uniquely corresponding thereto; differently expressed, at least one characteristic product ion peak in the mass spectrum can be uniquely assigned to the analyte, and at least one other characteristic product ion peak in the spectrum can be uniquely assigned to the internal standard. The amount of the analyte in the sample may be determined using a calibration curve and intensities of the analyte unique product ions and the internal standard unique product ions in the mass spectrum. The product ions in the m/z spectrum are derived from precursor ions delivered to the ion trap in one or more common ion injection events.

The concurrently isolated analyte precursor ions and internal standard precursor ions may be fragmented (dissociated) successively or simultaneously to generate the analyte product ions and the corresponding internal standard product ions.

A notched or multi-notch waveform may be applied to concurrently isolate the analyte precursor ions and the internal standard precursor ions from any background ions. The analyte and precursor ions may be fragmented using collision-induced dissociation (CID).

In another embodiment of the present invention, an ion trap mass spectrometer system is disclosed. The system includes an ion source configured to generate sample ions including analyte precursor ions having a first mass-to-charge ratio (m/z) and internal standard precursor ions having a second m/z. The system also includes an ion trap mass analyzer configured to receive the sample ions in a single ion injection event. The ion trap mass analyzer is provided with a controller programmed to apply voltages to the ion trap mass analyzer to cause the ion trap mass analyzer to perform the steps of concurrently isolating the analyte precursor ions and the internal standard precursor ions; fragmenting the analyte precursor ions to generate analyte product ions and fragmenting the internal standard precursor ions to generate internal standard product ions, wherein at least one characteristic product ion species of the analyte product ions uniquely corresponds to the analyte, and at least one characteristic product ion species of the internal standard product ions uniquely corresponds to the internal standard; and mass-sequentially or mass-selectively ejecting the ions to a detector to acquire a mass spectrum containing the analyte product ions and the internal standard product ions. The system is further provided with a data and control system programmed to determine the amount of the analyte in the sample using a relationship between intensities of the at least one characteristic analyte product ion species and at least one characteristic internal standard product ion species in the mass spectrum.

Further aspects of the present disclosure as set forth in the following numbered clauses:-
Clause 1. A method of operating an ion trap mass analyzer for quantification of analytes in a sample, comprising:
   a. introducing sample ions into the ion trap mass analyzer in a single injection event, the sample ions including first precursor ions having a first mass-to-charge ratio (m/z) and second precursor ions having a second m/z;
   b. concurrently isolating the first precursor ions and the second precursor ions;
   c. fragmenting the first precursor ions, but not the second precursor ions, to generate first product ions;
   d. performing a first scan to mass-selectively detect the first product ions and acquire a first mass spectrum including the first product ions, wherein an endpoint of the first scan is set such that the second precursor ions are retained in the ion trap mass analyzer;
   e. fragmenting the second precursor ions to generate second product ions; and
   f. performing a second scan to mass-selectively detect the second product ions and acquire a second mass spectrum including the second product ions.
Clause 2. The method of Clause 1 further comprising determining an amount of the analyte in the sample using a relationship between intensities of the product ions in the first mass spectrum and the second mass spectrum.
Clause 3. The method of Clause 1 wherein the first precursor ions are analyte precursor ions, and the second precursor ions are internal standard precursor ions.
Clause 4. The method of Clause 1 wherein the first precursor ions are internal standard ions, and the second precursor ions are analyte precursor ions.
Clause 5. The method of Clause 1 further comprising applying a notched waveform to concurrently isolate the first precursor ions and the second precursor ions from any background ions.
Clause 6. The method of Clause 1 wherein the fragmenting is carried out using ion trap collision-induced dissociation (CID).
Clause 7. The method of Clause 1 wherein an RF amplitude is scanned from a first point to an endpoint to eject the first product ions to the detector.
Clause 8. The method of Clause 1 wherein an RF amplitude is scanned from a first point to another endpoint to eject the second product ions to the detector.
Clause 9. An ion trap mass spectrometer system for quantification of analytes in a sample, comprising:
   a. an ion source configured so as to generate sample ions, the sample ions including first precursor ions having a first mass-to-charge ratio (m/z) and second precursor ions having a second m/z;
   b. an ion trap mass analyzer positioned to receive the sample ions, the ion trap mass analyzer having a controller programmed to apply voltages to the ion trap mass analyzer to cause the ion trap mass analyzer to performs steps of: concurrently isolating the first precursor ions and the second precursor ions; and to fragment the first precursor ions, but not the second precursor ions, to generate first product ions.
Clause 10. The system of Clause 9 further comprising a notched waveform to concurrently isolate the first precursor ions and the second precursor ions from any background ions.
Clause 11. The system of Clause 9 wherein the fragmented first precursor ions and the fragmented second precursor ions are produced through collision-induced dissociation (CID).
Clause 12. A method of operating an ion trap mass analyzer for quantification of analytes in a sample, comprising:
   a. introducing sample ions into the ion trap mass analyzer in a single injection event, the sample ions including analyte precursor ions having a first mass-to-charge ratio (m/z) and internal standard precursor ions having a second m/z;
   b. concurrently isolating the analyte precursor ions and the internal standard precursor ions;
   c. fragmenting the analyte precursor ions to generate analyte product ions;
   d. fragmenting the internal standard precursor ions to generate internal standard product ions, wherein at least one characteristic product ion species of the analyte product ions uniquely corresponds to the analyte, and at least one characteristic product ion species of the internal standard product ions uniquely corresponds to the internal standard; and
   e. mass-sequentially ejecting the ions to a detector to acquire a mass spectrum containing the analyte product ions and the internal standard product ions.
Clause 13. The method of Clause 12 further comprising determining an amount of the analyte in the sample using a relationship between intensities of the at least one characteristic analyte product ion species and the at least one characteristic internal standard product ion species in the mass spectrum.
Clause 14. The method of Clause 12 further comprising applying a notched waveform to concurrently isolate the analyte precursor ions and the internal standard precursor ions from any background ions.
Clause 15. The method of Clause 12 wherein the fragmenting is carried out using collision-induced dissociation (CID).
Clause 16. The method of Clause 12 wherein the analyte is a therapeutic drug or its metabolite, or a drug of abuse or its metabolite.
Clause 17. The method of Clause 12 wherein the analyte is an endogenous substance in a biological medium.
Clause 18. The method of Clause 12 wherein the internal standard is an isotopologue of the analyte.
Clause 19. The method of Clause 12 wherein the step of introducing sample ions into the ion trap mass analyzer includes generating ions from a sample using a direct sampling ion source.
Clause 20. The method of Clause 19 wherein the sample is a biological fluid.
Clause 21. An ion trap mass spectrometer system, comprising:
   a. an ion source configured to generate sample ions including analyte precursor ions having a first mass-to-charge ratio (m/z) and internal standard precursor ions having a second m/z;
   b. an ion trap mass analyzer positioned and adapted to receive the sample ions in a single injection event, the ion trap mass analyzer having a controller programmed to apply voltages to the ion trap mass analyzer to cause the ion trap mass analyzer to perform the steps of: concurrently isolating the analyte precursor ions and the internal standard precursor ions; fragmenting the analyte precursor ions to generate analyte product ions and the internal standard precursor ions to generate internal standard product ions, wherein at least one characteristic product ion species of the analyte product ions uniquely corresponds to the analyte, and at least one characteristic product ion species of the internal standard product ions uniquely corresponds to the internal standard; and mass-sequentially ejecting the ions to a detector to acquire a mass spectrum containing the analyte product ions and the internal standard product ions; and
   c. a data and control system programmed to determine an amount of the analyte in the sample using a relationship between intensities of the at least one characteristic analyte product ion species and at least one characteristic internal standard product ion species in the mass spectrum.
Clause 22. The system of Clause 21 wherein the controller is programmed to apply a notched waveform to the ion trap mass analyzer to isolate the analyte precursor ions and the internal standard precursor ions from any background ions.
Clause 23. The system of Clause 21 wherein the controller is programmed to apply excitation voltages to the ion trap mass analyzer to fragment the analyte precursor ions and the internal standard precursor ions by collision-induced dissociation (CID).

### BRIEF DESCRIPTION OF THE DRAWINGS

Figure 1 is a schematic diagram of an ion trap mass spectrometer which may be operated in accordance with methods and systems embodying the present invention.
Figure 2 is a lateral cross-sectional view of a two-dimensional radial ejection ion trap mass analyzer which may be used to implement methods and systems embodying the present invention.
Figure 3A is a flowchart depicting steps of a method of operating an ion trap mass analyzer for quantification of analytes in a sample, in accordance with one embodiment of the present invention.
Figure 3B is a flowchart depicting steps of a method of operating an ion trap mass analyzer for quantification of analytes in a sample, in accordance with another embodiment of the present invention.
Figures 4A-4C show a series histogram or m/z spectra illustrating the evolution of the populations of ions confined within an ion trap m/z analyzer or as well as those ejected in m/z analysis scans from the ion trap m/z analyzer during the performance of a method in accordance with one embodiment of the present invention.

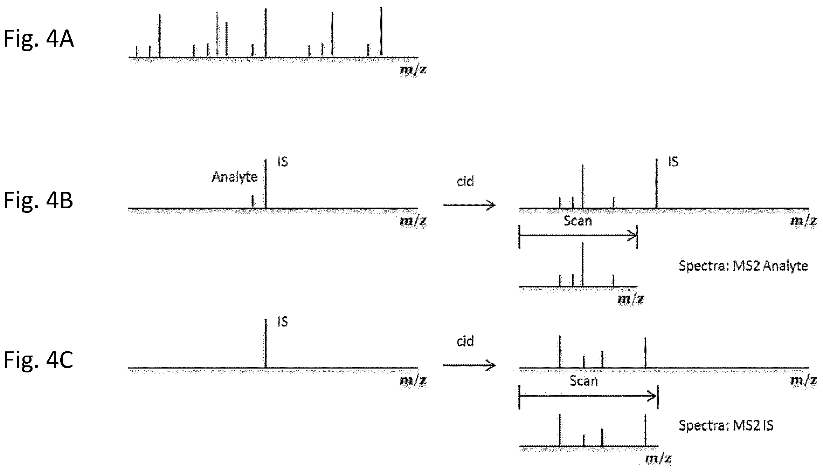

Figure 4A shows a conceptual depiction of the population of collectively ionized multiple potential precursor species of different m/z ratios confined in an ion trap subsequent to a common or the same ion injection event.
Figure 4B depicts the retained population of the precursor ions of the analyte and internal standard after the background ions are ejected in the process of ion isolation (left side of Figure 4B). After CID of the analyte ions, product ions are formed and are scanned to produce an analyte product ion m/z spectrum (right side of Figure 4B).
Figure 4C illustrates that subsequent to the acquisition of the mass spectrum of the analyte precursor ions in Figure 4B, the precursor ions of the internal standard remain isolated (left side of Figure 4C) and, after CID of the internal standard precursor ions, a mass spectrum of the product ions of the internal standard precursor ions is obtained (right side of Figure 4C).

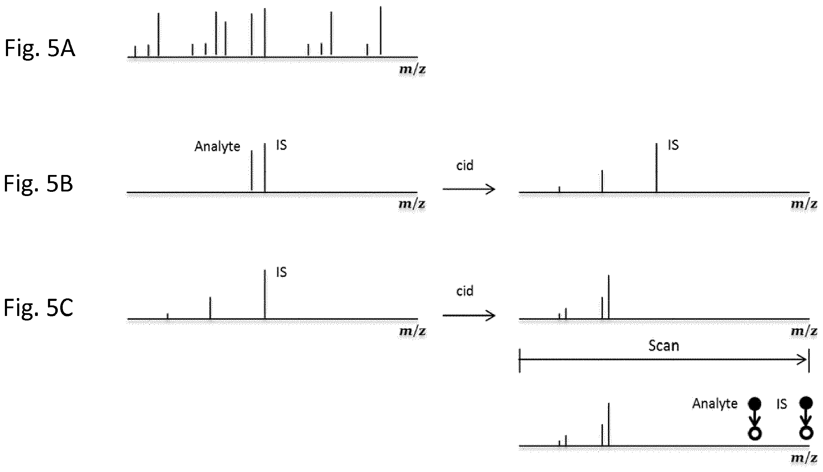

Figures 5A-5C show a series histograms or m/z spectra illustrating the evolution of the populations of ions confined within an ion trap mass analyzer or as well as those ejected in the m/z analysis scan from the ion trap mass analyzer during the performance of a method in accordance with another embodiment of the invention.
Figure 5A shows a conceptual depiction of a population of ionized multiple potential precursor species of different m/z ratios confined in the ion trap subsequent to a common ion injection event.
Figure 5B shows, after the analyte and internal standard ions are isolated from any background ions, the analyte precursor ions are fragmented.
Figure 5C shows the internal standard ions are fragmented, and the fragment ions of the analyte and the internal standard are analyzed by scanning at the same time. A mass spectrum is generated for the product ions of the analyte and the internal standard as shown.

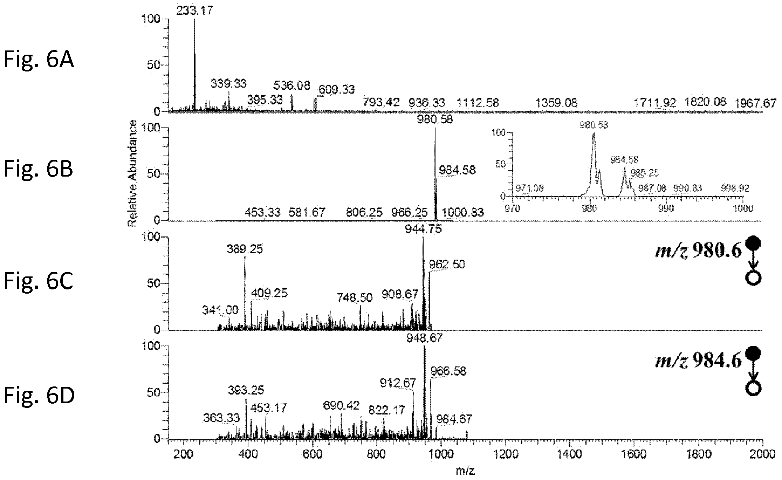

Figure 6A shows example data for a full scan mass spectrum of an immunosuppressant solution containing precursor ions of everolimus and everolimus-d4, ionized using paper spray ionization.
Figure 6B shows the sodium adduct precursor molecular ions of everolimus and everolimus-d4 isolated from the background ions, with the insert showing a zoom in on the two isolated m/z peaks.
Figure 6C shows the MS² (product ion) m/z spectrum from the sodium adduct precursor ions of everolimus acquired by fragmenting and analyzing the precursor ions at m/z 980.6 using the embodiment of the present invention described in Figures 4A-4C.
Figure 6D shows the MS² (product ion) spectrum from the sodium adduct precursor ions of everolimus-d4 acquired by fragmenting and analyzing the precursor ions at m/z 984.6 using the embodiment of the present invention described in Figures 4A-4C.

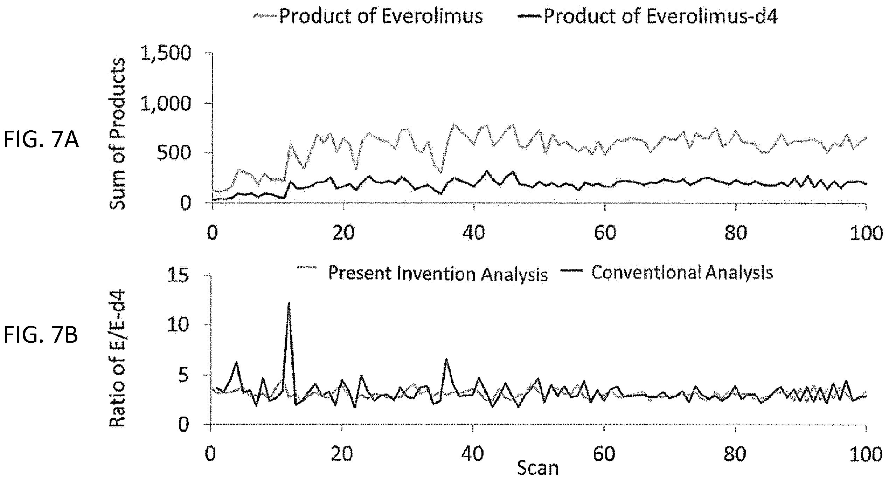

Figure 7A shows the total product ion intensity of everolimus and everolimus-d4 in a pure sample using paper spray ionization as a function of time/scan number.
Figure 7B shows the ratio of everolimus/everolimus-d4 total product ion intensities using the embodiment of the present invention described in Figures 4A-4C compared to a conventional mass analysis quantitative method involving alternating separate ion injection events and associated product ion scans for everolimus and everolimus-d4.

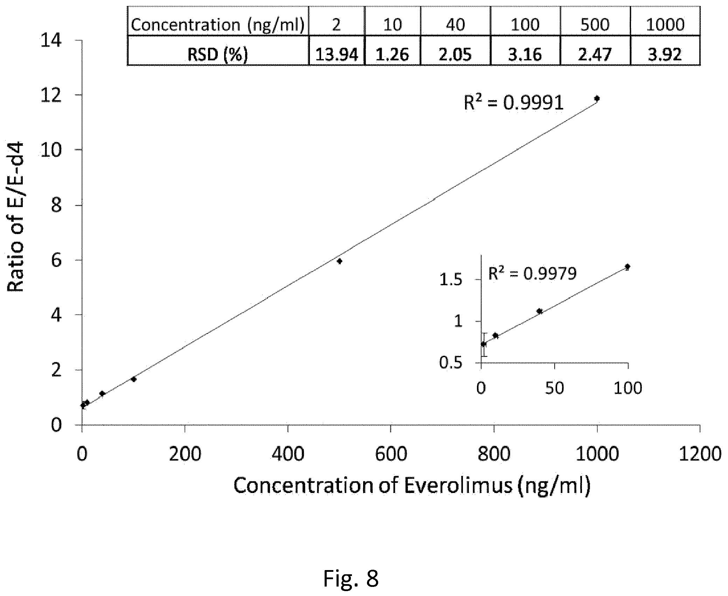

Figure 8 is a quantitative calibration curve showing the ratio of everolimus/everolimus-d4 in blood with paper spray ionization over a range of concentrations.

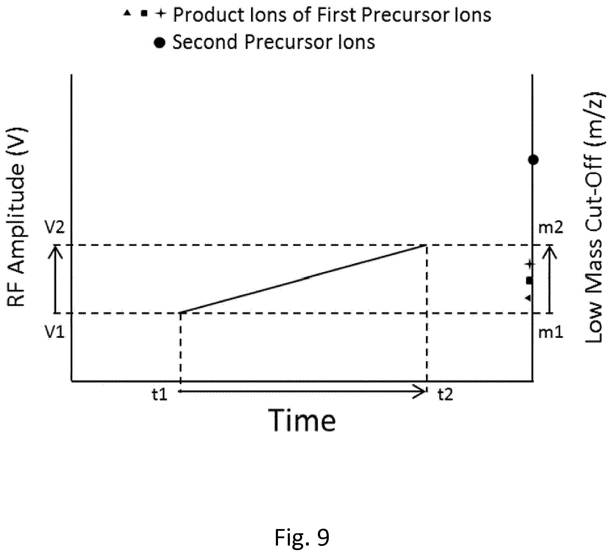

Figure 9 is a graph illustrating a ramping sequence of the amplitude of the trapping RF voltage for practical implementation of an analytical scan to mass sequentially detect product ions having different mass-to-charge (m/z) ratios in a range m1 to m2.

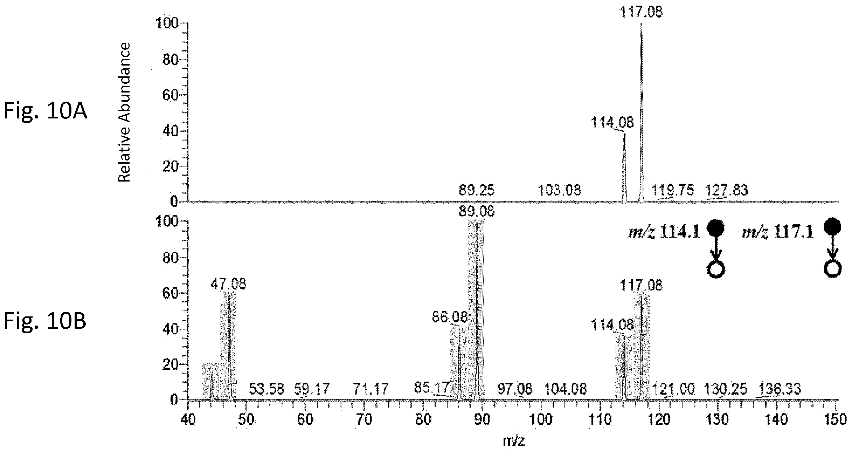

Figure 10A shows precursor ions of creatinine and creatinine-d3 ionized using nano-electrospray ionization and isolated from any background ions.
Figure 10B shows the MS² m/z spectrum of the product ions of both creatinine and creatinine-d3, obtained using the embodiment of the present invention described in Figures 5A-5C

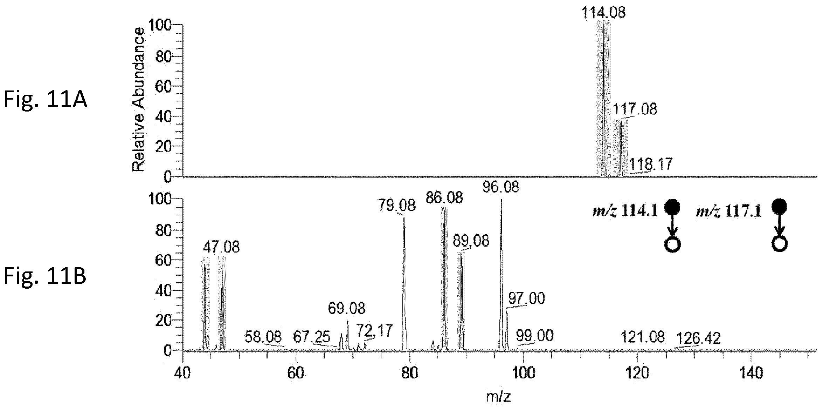

Figure 11A shows isolated m/z peaks of protonated creatinine and creatinine-d3 using dried blood spots with paper spray ionization.
Figure 11B shows the MS² m/z spectrum of product ions of protonated creatinine and protonated creatinine-d3 after fragmentation of the precursor ions of m/z 114.1 and 117.1.

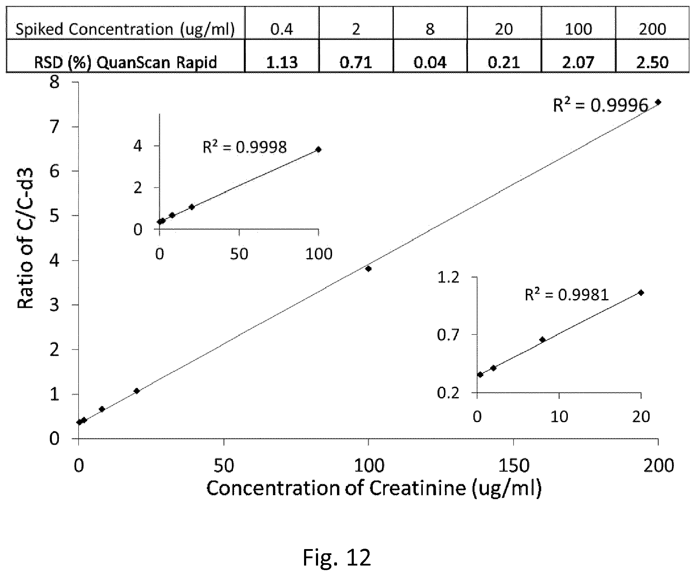

Figure 12 is a quantitative calibration curve showing the ratio of creatinine/creatinine-d3 in blood with paper spray ionization over the concentration range from 0.4 µg/ml to 200 µg/ml using the embodiment of the present invention described in Figures 5A-5C.

### DETAILED DESCRIPTION OF EMBODIMENTS

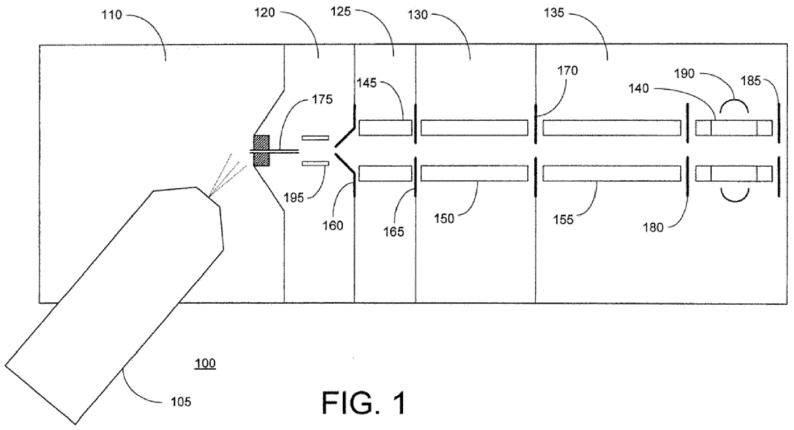

Figure 1 illustrates an example of an ion trap mass spectrometer 100 which may be operated in accordance with embodiments of the present invention. It will be understood that certain features and configurations of mass spectrometer 100 are presented by way of illustrative examples, and should not be construed as limiting the methods of the present invention to implementation in a specific environment. An ion source, which may take the form of a conventional electrospray ion source 105, generates ions from a sample material. In other implementations, the ion source may take the form of a direct sampling ion source such as the Paper Spray ionization system available from Prosolia (Indianapolis, IN), in which a sample (e.g., a biological fluid such as blood or plasma) is deposited on a porous wicking material (e.g., paper) and elctrosprayed from a tip of the material.

The ions are transported from ion source chamber 110, which for an electrospray source will typically be held at or near atmospheric pressure, through several intermediate vacuum chambers 120, 125 and 130 of successively lower pressure, to a vacuum chamber 135 in which ion trap 140 resides. Efficient transport of ions from ion source 105 to ion trap 140 is facilitated by a number of ion optic components, including quadrupole RF ion guides 145 and 150, octopole RF ion guide 155, skimmer 160, tube lens 195 and electrostatic lenses 165 and 170. Ions may be transported between ion source chamber 110 and first intermediate chamber 120 through an ion transfer tube 175 that is heated to evaporate residual solvent and break up solvent-analyte clusters. Intermediate chambers 120, 125 and 130 and vacuum chamber 135 are evacuated by a suitable arrangement of pumps to maintain the pressures therein at the desired values. In one example, intermediate chamber 120 communicates with a port of a mechanical pump (not depicted), and intermediate pressure chambers 125 and 130 and vacuum chamber 135 communicate with corresponding ports of a multistage, multiport turbo-molecular pump (also not depicted). Ion trap 140 includes axial trapping electrodes 180 and 185 (which may take the form of conventional plate lenses) positioned axially outward from the ion trap electrodes to assist in the generation of a potential well for axial confinement of ions, and also to effect controlled gating of ions into the interior volume of ion trap 140 in order to regulate the filling (injection) time of ion trap 140; for example, DC offset voltages applied to axial trapping electrode 180 (and/or electrodes located upstream in the ion path relative to axial trapping electrode 180) may be set to selectively allow or block the flow of ions into ion trap 140. A damping/collision gas inlet (not depicted), coupled to a source of an inert gas such as helium or argon, will typically be provided to controllably add a damping/collision gas to the interior of ion trap 140 in order to facilitate ion trapping, fragmentation and cooling. Ion trap 140 is additionally provided with at least one set of ion detectors 190 (wherein each set may consist of a single detector or multiple detectors) that generate a signal representative of the abundance of ions ejected from the ion trap.

Ion trap 140, as well as other components of mass spectrometer 100, communicate with and operate under the control of a data and control system (not depicted), which will typically include a combination of one or more general purpose computers and application-specific circuitry and processors. Generally described, the data and control system acquires and processes data and directs the functioning of the various components of mass spectrometer 100. The data and control system will have the capability of executing a set of instructions, typically encoded as software or firmware, for carrying out the analysis methods described herein.

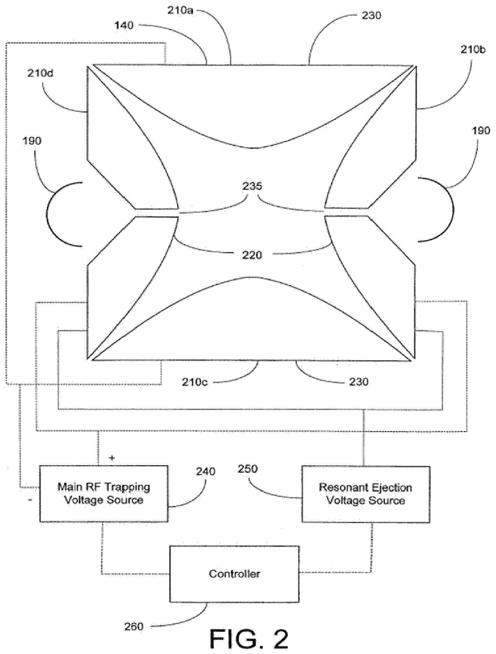

Figure 2 depicts a cross-sectional view of ion trap 140, which may be constructed as a conventional two-dimensional ion trap of the type described by Schwartz et al. in "A Two-Dimensional Quadrupole Ion Trap Mass Spectrometer", J. Am. Soc. Mass Spectrometry, 13: 659-669 (2002). Ion trap 140 includes four elongated electrodes 210a, 210b, 210c, 210d, each electrode having an inwardly directed hyperbolic-shaped surface, arranged in two electrode pairs 220 and 230 aligned with and opposed across the trap centerline. The electrodes of one electrode pair 220 are each adapted with an aperture (slot) 235 extending through the thickness of the electrode in order to permit ejected ions to travel through the aperture to an adjacently located detector 190. A main RF trapping voltage source 240 applies opposite phases of an RF voltage to electrode pairs 220 and 230 to establish an RF trapping field that radially confines ions within the interior of ion trap 140. During m/z analysis scans, resonant ejection voltage source 250 applies an oscillatory voltage across apertured electrode pair 220 to create a dipole excitation field. The amplitude of the applied main trapping RF voltage is ramped such that ions come into resonance with the excitation field in order of their m/z's. The resonantly or near resonantly excited ions develop unstable trajectories and are ejected through apertures 235 to detectors 190. Control of the main RF trapping voltage, resonant ejection voltage, and CID excitation voltage applied to electrodes of ion trap 140, specifically adjustment of their amplitudes, is effected by a controller 260 that forms part of the data and control system.

While Figure 2 depicts a conventionally arranged and configured two-dimensional ion trap, practice of the invention should not be construed as being limited to any particular ion trap geometry or configuration. In an alternative implementation, the ion trap may take the form of a symmetrically stretched, four-slotted ion trap of the type described in the U.S. Patent 8,415,617 by Jae C. Schwartz and entitled "Two-Dimensional Radial-Ejection Ion Trap Operable as a Quadrupole Mass Filter", the disclosure of which is herein incorporated by reference. The ion trap may also constitute a part of a dual ion trap mass analyzer structure disclosed in U.S. Patent 7,692,142 for "Differential-Pressure Dual Ion Trap Mass Analyzer and Methods of Use Thereof" by Jae C. Schwartz et al, which is also incorporated herein by reference. The methods described herein may also be utilized in connection with conventional rotationally symmetric three-dimensional ion traps (including variants such as toroidal or cylindrical ion traps) as well as for rectilinear ion traps.

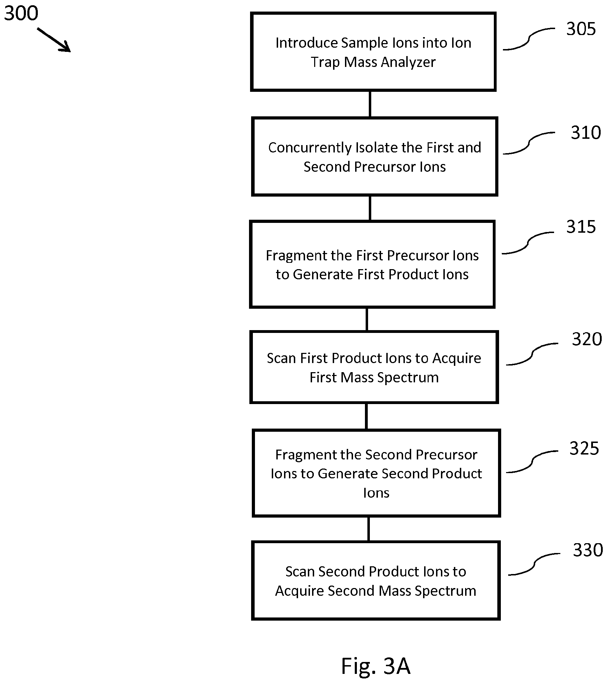

Figure 3A is a flowchart 300 depicting steps of a method of operating an ion trap mass analyzer for quantification of analytes in a sample, in accordance with one embodiment of the present invention. In certain implementations, the sample may take the form a biological fluid, such as blood, plasma, saliva, or urine, or fraction thereof, or an extract from a biological tissue sample. The analyte may comprise, for example, a therapeutic drug or its metabolite, a drug of abuse or its metabolite, or an endogenous substance, such as creatinine or a steroid hormone. In step 305, sample ions, generated by the ionization source by ionizing molecules in the sample by an appropriate technique, are introduced into an ion trap mass analyzer. The sample ions include first precursor ions having a first m/z and second precursor ions having a second m/z, different from the first m/z. In one specific embodiment, the first precursor ions are analyte precursor ions, and the second precursor ions are internal standard precursor ions. As is known in the art, the internal standard from which the internal precursor ions are generated may consist of an isotopologue (e.g., a deuterated version) of the corresponding analyte. While the description set forth below discusses quantification of a single analyte, variants of this technique may quantify multiple analytes (e.g., a panel of two or more therapeutic drugs). Alternatively, the first precursor ions can be internal standard precursor ions, while the second precursor ions can be analyte precursor ions. In a preferred mode, the first precursor ions and the second precursor ions are introduced into the ion trap mass analyzer from a common injection event, i.e. the first and second precursor ions both enter the ion trap during a period defined by an injection start time (when the applied DC voltage(s) is/are set to allow the passage of ions into the ion trap) and an injection end time (when the applied DC voltage(s) is/are switched to a value that blocks the passage of ions into the ion trap).

During and/or following the introduction of ions including the first and second precursor ions into the ion trap, the first precursor ions and the second precursor ions are isolated concurrently (step 310) by removing ions having m/z's other than those of the first and second precursor ions. As is known in the art, this operation is performed by applying oscillatory voltages to the ion trap electrodes to establish an electric field that kinetically excites the non-desired ions (those other than the first and second precursor ions) such that the excited ions are ejected from the ion trap or are neutralized via collisions with electrode surfaces. In one illustrative implementation, concurrent isolation of the first and second precursor ions is achieved by applying a notched multifrequency waveform voltage to the trap electrodes, as described in U.S. Patent No. 9,048,074. In such waveforms, the frequency notches are set to correspond to the secular frequencies of the ions to be isolated, such that those ions are not sufficient kinetically excited to cause their ejection or dissociation. Next, in step 315, the first precursor ions, but not the second precursor ions, are fragmented to generate first product ions. Fragmentation may be carried out using collision induced dissociation (CID) by applying an excitation waveform with a frequency which closely matches a secular frequency of the first precursor ions but is sufficiently different from the secular frequency of the second precursor ions to avoid substantial resonant excitation thereof. In this manner, at least a portion of the first precursor ions undergo energetic collisions with atoms or molecules of collision gas (also referred to as background or damping gas), causing them to fragment into first product ions, whereas the second precursor ions remain substantially unfragmented.

Next, in step 320, a first analytical scan is performed to mass-sequentially eject the first product ions to the detector of the ion trap mass analyzer and thereby acquire a first mass spectrum that includes the first product ions. As is known in the art and is discussed above, an analytical scan may be conducted in an ion trap mass analyzer by the resonant ejection method, in which a dipole excitation field is established within the ion trap, and a parameter of the RF trapping field is ramped (progressively varied) such that ions come into resonance with the excitation field in order of their m/z's, with the resonantly excited ions being ejected to a detector. Per the Mathieu equation, which characterizes ion motion in an oscillatory field, the secular frequency of ion motion is approximately proportional to the amplitude of the applied RF trapping voltage, and inversely proportional to the ion's m/z. An analytical scan is commonly performed by linearly ramping the applied RF trapping amplitude between a start point and an endpoint, such that the secular frequencies of the trapped ions are concomitantly varied. Alternatively, an analytical scan may be performed by ramping the frequency of the excitation field between a start point and an endpoint. The ramping of the RF trapping voltage amplitude in step 320 is illustrated by the graph appearing in Figure 9. As depicted, the RF trapping voltage amplitude is linearly varied during the scan from a first value V1 at time t1, to a second value V2 at time t2. The endpoint of the scan (as used herein, the endpoint will refer to the terminal value of the RF trapping field parameter varied during the analytical scan, which in this case is the RF trapping voltage amplitude) is selected such that the scan is terminated after the first precursor ions have been mass selectively ejected, but before the second precursor ions develop a secular frequency that matches the resonant ejection frequency.

Next, in step 325, the second precursor ions, retained in the ion trap mass analyzer, are fragmented to generate second product ions. In one embodiment, fragmentation is carried out using CID by applying an excitation waveform with a frequency that closely matches a secular frequency of the second precursor ions, creating a resonance condition by which the second precursor ions pick up energy and collide with molecules of a background gas and dissociate.

Next, in step 330, a second analytical scan is performed to mass-sequentially detect the second product ions and acquire a second mass spectrum that includes the second product ions. Again as known in the art, the second analytical scan may be performed by ramping the RF trapping voltage amplitude between a start point to another endpoint while applying a resonant excitation voltage to resonantly eject the second product ions to the detector in order of their m/z's.

The results of the foregoing method steps are illustrated by the conceptual spectra depicted in FIGS. 4A-4C. Figure 4A shows a depiction of multiple precursor species ion of different m/z ratios introduced into an ion trap mass analyzer from the same ion injection event. In this example, the precursor ions selected for MS² quantitative analysis comprise analyte ions which are of lower m/z compared to the corresponding internal standard ions. Figure 4B illustrates MS² analysis of the precursor ions of the analyte. First, ions other than those of the targeted analyte species and its corresponding internal standard are ejected in the process of ion isolation, as shown on the left side of Figure 4B. As discussed above, a notched multifrequency waveform can be used to isolate the precursor ion species. In one embodiment, the analyte precursor ions and the internal standard precursor ions are concurrently isolated within an ion trap mass analyzer using a notched multifrequency waveform having frequency notches corresponding to the secular frequencies of the analyte and internal standard precursor ions, as is shown.

The analyte precursor ions are then selectively dissociated (for example, using the CID technique with the excitation frequency tuned to match the secular frequency of the analyte ions) and then analyzed by scanning the RF amplitude to eject particular product ions of the analyte to a detector, while the precursor ions of the internal standard are trapped and intact. As discussed above an endpoint of the scan range for the analyte product ions is set such that the internal standard precursor ions are not ejected. A mass spectrum is generated for the product ions of the analyte, as shown on the right side of Figure 4B.

Figure 4C illustrates, subsequent to the acquisition of the mass spectrum of the analyte precursor ions in Figure 4B, mass analysis of product ions produced by fragmentation of the internal standard precursor ions. As shown on the left side of Figure 4C, the analyte precursor ions have already been fragmented, analyzed and detected, leaving only the internal standard precursor ions. Next, the internal standard precursor ions are selectively dissociated by (for example) the CID technique and a MS² spectrum is generated for the product ions of the internal standard, as shown on the right side of Figure 4C, by mass-sequential ejection of ions to the ion trap detector.

As a result, spectra of the product ions of the analyte and internal standard can be obtained using only a single ion accumulation step. The abundance of the product ions of the analyte and the internal standard can be used to calculate the ratio of analyte versus internal standard.

As is known in the art, the quantity of the analyte present in the sample may be calculated using a pre-calibrated relationship between the intensities of one or more characteristic product ions of the analyte appearing in the spectrum produced by the first analytical scan and the intensities of the corresponding characteristic product ions of the internal standard (which is added in a known quantity to the sample) appearing in the spectrum produced by the second analytical scan.

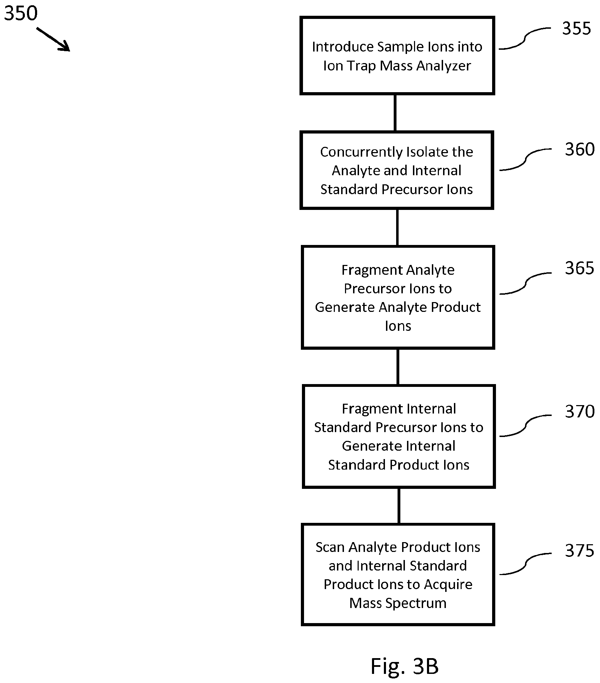

Figure 3B is a flowchart 350 depicting steps of a method of operating an ion trap mass analyzer for quantification of analytes in a sample, in accordance with one embodiment of the present invention. In certain implementations, the sample may take the form of a biological fluid, such as blood, plasma, saliva, or urine, or fraction thereof, or an extract from a biological tissue sample. The analyte may comprise, for example, a therapeutic drug or its metabolite, a drug of abuse or its metabolite, or an endogenous substance, such as creatinine or a steroid hormone. In step 355, sample ions, generated by the ionization source by ionizing molecules in the sample by an appropriate technique, are introduced into an ion trap mass analyzer. The sample ions include analyte precursor ions having a first mass-to-charge (m/z) ratio and internal standard precursor ions having a second m/z, different from the first m/z. As is known in the art, the internal standard from which the internal precursor ions are generated may consist of an isotopologue (e.g., a deuterated version) of the corresponding analyte. While the description set forth below discusses quantification of a single analyte, variants of this technique may quantify multiple analytes (e.g., a panel of two or more therapeutic drugs). The analyte precursor ions and the internal standard precursor ions are introduced into the ion trap mass analyzer from a common ion injection event, i.e. the analyte and internal standard precursor ions both enter the ion trap during a period defined by an injection start time (when the applied DC voltage(s) is/are set to allow the passage of ions into the ion trap) and an injection end time (when the applied DC voltage(s) is/are switched to a value that blocks the passage of ions into the ion trap).

Following the introduction of ions including the analyte and internal standard precursor ions into the ion trap, the analyte precursor ions and the internal standard precursor ions are isolated concurrently (step 360) by removing ions having m/z's other than those of the first and second precursor ions. As is known in the art, this operation is performed by applying oscillatory voltages to the ion trap electrodes to establish an electric field that kinetically excites the non-desired ions (those other than the analyte and internal standard precursor ions) such that the excited ions are ejected from the ion trap or are neutralized via collisions with electrode surfaces. In one illustrative implementation, concurrent isolation of the analyte and internal standard precursor ions is achieved by applying a notched multifrequency waveform voltage to the trap electrodes, as described in U.S. Patent No. 9,048,074. In such waveforms, the frequency notches are set to correspond to the secular frequencies of the ions to be isolated, such that those ions are not sufficient kinetically excited to cause their ejection or dissociation.

According to a variant of the above-described technique, isolation of the analyte and the internal standard precursor ions may be performed concurrently with their introduction into the ion trap. This result may be achieved by applying an isolation waveform to the ion trap electrodes such that the non-selected ions - ions other than the analyte and internal standard precursor ions - are ejected from the ion trap or neutralized on its surfaces during the injection event.

Next, in step 365, the analyte precursor ions are fragmented to generate analyte product ions. In step 370, the internal standard precursor ions are fragmented to generate internal standard product ions. Further, the analyte precursor ions and the internal standard precursor ions can be fragmented simultaneously or successively. While Figure 3B depicts the analyte precursor ions as being fragmented first and the internal standard precursor ions second, it should be understood that embodiments of the present invention are not limited to this order of fragmentation. In some embodiments, the internal standard precursor ions can be fragmented first, with the analyte precursor ions being fragmented second, or both simultaneously.

Fragmentation in steps 365 and 370 may be carried out using well known ion trap type collision-induced dissociation (CID) by applying a first excitation waveform with a frequency which closely matches a secular frequency of the analyte precursor ions and a second excitation waveform with a frequency which closely matches a secular frequency of the internal standard precursor ions. In this manner, at least a portion of the analyte precursor ions and the internal standard ions undergo numerous collisions with atoms or molecules of collision gas (also referred to as background or damping gas) to cause them to become sufficiently vibrationally excited to fragment into analyte product ions and internal standard product ions.

Next, in step 375, an analytical scan is performed to mass-sequentially eject the analyte product ions and the internal standard product ions to the detector of the ion trap mass analyzer and thereby acquire a mass spectrum that includes both the analyte product ions and the internal standard product ions. As is known in the art and is discussed above, an analytical scan may be conducted in an ion trap mass analyzer by the resonant ejection method, in which a dipole excitation field is established within the ion trap, and a parameter of the RF trapping field is ramped (progressively varied) such that ions come into resonance with the excitation field in order of their m/z's, with the resonantly excited ions being ejected to a detector. The detector generates signals characteristic of the abundances of the ejected ions, which signals are processed by the data and control system to construct a product ion spectrum.

After acquisition of the product ion spectrum, the amount of the analyte present in the sample may be calculated by the data and control system using peak intensities in the spectrum. More specifically, provided that the internal standard is appropriately selected, at least one characteristic internal standard product ion species will uniquely correspond to the internal standard, such that its peak in the spectrum can be uniquely assigned to the internal standard, and at least one characteristic analyte product ion species will uniquely correspond to the analyte, such that its peak in the spectrum can be uniquely assigned to the analyte. As is depicted in the examples described below, the two peaks are sufficiently spaced apart in the spectrum (e.g., by at least 1 Thomson unit) so as to be clearly resolved in the spectrum. The data and control system may then determine the intensities of the peaks of the characteristic analyte product ion species and internal standard product ion species in the spectrum, and calculate the abundance of the analyte in accordance with a known (e.g., calibrated) relationship between analyte amount and the ratio of the intensities of these peaks, in a manner well known in the art.

The results of the foregoing method steps are illustrated by the spectra depicted in FIGS. 5A-5C. Figure 5A shows multiple species ion of different m/z ratios introduced into an ion trap mass analyzer from the same ion injection event. In this example, the precursor ions selected for MS2 quantitative analysis comprise analyte ions which are of lower m/z compared to corresponding internal standard ions.

Figure 5B illustrates isolation and subsequent fragmentation of the analyte and internal standard precursor ions. First, ions other than those of the targeted analyte species and the corresponding internal standard are ejected in the process of ion isolation, as shown on the left side of Figure 5B. As discussed above, a notched multifrequency waveform can be used to isolate the analyte species and its corresponding internal standard. After the analyte and internal standard ions are isolated, the analyte precursor ions are fragmented (for example, using the ion trap type CID technique with the excitation frequency tuned to match the secular frequency of the analyte ions), as shown on the right side of Figure 5B. Subsequently, or simultaneously, to the dissociation of the analyte precursor ions, the internal standard precursor ions shown on the left side of Figure 5C are dissociated (for example, using the CID technique with the excitation frequency tuned to match the secular frequency of the internal standard precursor ions), and the product ions of both the analyte and the internal standard are analyzed at the same time, as shown on the right side of Figure 5C.

As a result, spectra of the product ions of the analyte and internal standard are obtained as a composite product ion spectrum. Abundance of product ions of different precursor ions of the analyte and the internal standard can be used to calculate the ratio of analyte versus internal standard.

### EXPERIMENTAL SECTION

The following examples are set forth to further describe embodiments and aspects of the present invention but are not to be construed as limiting the scope thereof.

Figure 6A shows a full scan mass spectrum of an immunosuppressant solution containing everolimus and everolimus-d4. In this example, 100 µl of an immunosuppressant solution containing everolimus and everolimus-d4, each at a concentration of 100 ng/ml, was deposited directly onto a disposable Paper Spray cartridge. After depositing the sample directly onto a disposable Paper Spray cartridge, the sample was absorbed into the paper substrate, allowed to dry and inserted into an auto-sampler for generating ions to the mass spectrometer. A high voltage of approximately 4 kV was applied to the paper substrate via a contact on the cartridge to produce an electrospray from the paper tip.

Figure 6B shows the spectrum of the isolated sodium adduct precursor ions of both everolimus and everolimus-d4. The insert on the right side of Figure 6B shows a zoom in on the isolated peaks which uses an isolation window width of approximately 2 amu for each peak. Finer isolation can be obtained with a narrower isolation window.

Figure 6C shows the MS² spectrum of the sodium adduct everolimus acquired by fragmenting and analyzing only the precursor ions of m/z 980.6. The MS² spectrum of Figure 6C was obtained by scanning the RF to an amplitude high enough to eject product ions generated from the sodium adduct of everolimus but still keep the precursor ions of higher m/z, including the sodium adduct of everolimus-d4 (not shown).

After acquisition of the MS² spectrum of the precursor ions of lower m/z, the precursor ions of higher m/z, everolimus-d4, are fragmented and analyzed as shown in Figure 6D. By the end of the analysis, precursor ions of different m/z's from the same ion injection events were analyzed respectively.

A set of experiments were conducted to explore the improvement of RSD that could be achieved by practicing embodiments of the present invention. Figure 7A shows the product ion intensity of 100 ng/ml everolimus and everolimus-d4 pure sample using paper spray ionization. As shown in Figure 7A, the intensity of product ions of everolimus and everolimus-d4 fluctuated with the use of the PaperSpray ionization technique in this experiment.

Figure 7B shows the ratio of everolimus/everolimus-d4 using the embodiment of the present invention described above compared to conventional mass analysis involving separate ion injection events for the precursor ions of different m/z ratios. The everolimus/everolimus-d4 ratios calculated - present invention embodiment versus conventional analysis - are plotted against the scan numbers, as shown in Figure 7B. Improved ratio stability was observed with the embodiment of the present invention. Signal intensities of product ions of 389.25, 409.25, 453.25, 564.25, 582.25, 651.5, 747.5, and 775.5 were summed up to represent the products of everolimus. Signal intensities of product ions of 393.25, 409.25, 453.25, 564.25, 582.25, 655.5, 751.5, and 779.5 were summed up to represent the product ions of everolimus-d4. The comparison of the stability in the everolimus/everolimus-d4 ratios demonstrates lower RSD and thus higher precision for quantitative analysis.

Figure 8 is a quantitative calibration curve showing the ratio of everolimus/everolimus-d4 in blood using a paper spray ionization source. A set of experiments were conducted to explore the improvement of RSD using the inventive aspects described herein. A series of dried blood samples containing the internal standard everolimus-d4 at 10 ng/ml but the analyte everolimus at different concentrations from 2 to 1000 ng/ml were analyzed to develop a calibration curve for quantitation as shown. 10 ul blood was applied to the PaperSpray® cartridge and air-dried for up to 2 h. Pure methanol of 100 µl, 30 µl, and 20 µl were then applied to the paper to elute compounds from the matrix at time=0 minutes, 5 minutes, and 8 minutes, respectively. DBS on each PaperSpray cartridge was analyzed for approximately10 minutes with multi applications of organic solvent. The spray voltage was 4.5 kV. Error bars were plotted but may not be seen until zoomed in.

Still referring to Figure 8, ion abundance of product ions of 389.25, 409.25, 427.25, 441.25, 453.17, 459.25, 485.25, 518.25, 564.25, 582.33, 596.33, 614.33, 651.42, 686.33, 747.5, 775.5, 793.5, 807.5, 819.5, 930.58, 948.58, and 952.58 were added up to represent the abundance of everolimus. Ion abundance of product ions of 393.25, 409.25, 427.25, 441.25, 453.17, 459.25, 485.25, 522.25, 564.25, 582.33, 596.33, 614.33, 655.42, 690.33, 751.5, 779.5, 797.5, 811.5, 823.5, 934.58, 952.58, and 956.58 were added up to represent the abundance of everolimus-d4. For each point in the curve, three samples were analyzed and the everolimus/everolimus-d4 ratios were calculated by dividing the ion abundance of everolimus by the ion abundance of everolimus-d4. The calibration curve was linear over the range from 2 ng/ml to 1000 ng/ml. More significantly, RSD values across the whole range were less than 15%. The RSD values of concentrations of 10, 40, 100, 500, and 1000 ng/ml were less than 4%.

Figure 10A shows creatinine and creatinine-d3, ionized using nano-electrospray ionization and m/z isolated from any background ions with a dual-notch isolation waveform. In this example, a solution containing creatinine and creatinine-d3, each at a concentration of 100 ng/ml, was infused to an EASY-Spray™ probe at the speed of 0.5 µl/min. The spray voltage was approximately 4 kV.

Precursor ions of lower m/z, protonated creatinine, were firstly fragmented by trap type CID which is inherently m/z selective. After the fragmentation of the precursor ions of lower m/z, the precursor ions of higher m/z, protonated creatinine-d3, were fragmented.

After the fragmentation of the precursor ions of m/z 114.1 and 117.1 respectively, product ions of both creatinine and creatinine-d3 were analyzed at the same time and the MS² spectrum of the protonated creatinine and protonated creatinine-d3 was generated, as shown in Figure 10B. The collision energy was set to be able to dissociate approximately 80% of the precursor ions. The remaining approximately 20% were still present in the spectra after fragmentations.

Figure 11A shows isolated peaks of protonated creatinine and creatinine-d3 from dried blood spots using paper spray ionization. In this example, a 10 µl blood sample spiked with creatinine and creatinine-d3 at a concentration of (20+x) ug/ml and 10ug/ml respectively, was deposited directly onto a disposable PaperSpray cartridge. After depositing the sample directly onto the disposable PaperSpray cartridge, the sample was absorbed into the paper substrate, allowed to dry and inserted into a PaperSpray auto-sampler for generating ions to the mass spectrometer. Pure methanol of 100 µl was applied to the paper to elute compounds from the matrix. A high voltage of approximately 4.5 kV was applied to the paper substrate via a contact on the cartridge to produce an electrospray from the paper tip.

Figure 11B shows the MS² spectrum of the protonated creatinine and protonated creatinine-d3 after fragmentation of the precursor ions of m/z 114.1 and 117.1. Product ions of m/z 43.1, 86.1, 47.1, 89.1 from the protonated creatinine and protonated creatinine-d3 were observed to be distinct.

A set of experiments were conducted to explore the improvement of RSD the embodiments of the present invention could make. A series of dried blood samples containing the internal standard creatinine-d3 at 10 µg/ml and the analyte creatinine at different spiked concentrations from 0.4 to 200 µg/ml were analyzed to develop a calibration curve for quantitation as shown in Figure 12. Ion abundance of product ions of 43.1 and 86.1 were summed to represent the abundance of creatinine. Ion abundance of product ions of 47.1 and 89.1 were added up to represent the abundance of creatinine-d3. 10 µl blood was applied to the PaperSpray cartridge and air-dried for up to two hours. Pure methanol of 100 µl, 30 ul, and 20 ul were then applied to the paper to elute compounds from the matrix at t=0 min, 5 min, and 8 min, respectively. The dried blood sample on each PaperSpray cartridge was analyzed for approximately 10 minutes with multi applications of organic solvent. The spray voltage was approximately 4.5 kV. Error bars were plotted but may not be seen until zoomed in.

For each point in the curve, the samples were analyzed and the creatinine/creatinine-d3 ratio was calculated by dividing the ion abundance of 43.1 and 86.1 by the ion abundance of 47.1 and 89.1. The calibration curve was linear over the range from 0.4 µg/ml to 200 ug/ml. More significantly, RSD values across the whole range were less than 3%. The RSD values of concentrations of 2, 8, and 20 µg/ml were less than 1%.

The advantages of the present invention include higher efficiency of sample utilization. Multiple precursor ions of different m/z can be analyzed with a single ion injection event, allowing time for more analytical scans to be performed and providing improved precision for quantitative measurements. Other features and advantages include a simple hardware configuration to practice embodiments of the present invention. For example, a single linear ion trap mass spectrometer configuration allows the analysis to be performed at a simple, low cost, and robust system. Thus, the present invention eliminates any requirement of a complicated configuration in hardware to analyze precursor ion species with different m/z using the same ion injection event.

The present invention has been described in terms of specific embodiments incorporating details to facilitate the understanding of the principles of construction and operation of the invention. As such, references herein to specific embodiments and details thereof are not intended to limit the scope of the claims appended hereto. It will be apparent to those skilled in the art that modifications can be made in the embodiments chosen for illustration without departing from the spirit and scope of the invention.

## Claims

1. A method of operating an ion trap mass analyzer for quantification of analytes in a sample, comprising:
a. introducing sample ions into the ion trap mass analyzer in a single injection event, the sample ions including first precursor ions having a first mass-to-charge ratio (m/z) and second precursor ions having a second m/z;
b. concurrently isolating the first precursor ions and the second precursor ions;
c. fragmenting the first precursor ions, but not the second precursor ions, to generate first product ions;
d. performing a first scan to mass-selectively detect the first product ions and acquire a first mass spectrum including the first product ions, wherein an endpoint of the first scan is set such that the second precursor ions are retained in the ion trap mass analyzer;
e. fragmenting the second precursor ions to generate second product ions; and
f. performing a second scan to mass-selectively detect the second product ions and acquire a second mass spectrum including the second product ions.

2. The method of Claim 1 further comprising determining an amount of the analyte in the sample using a relationship between intensities of the product ions in the first mass spectrum and the second mass spectrum.

3. The method of Claim 1 wherein the first precursor ions are analyte precursor ions, and the second precursor ions are internal standard precursor ions.

4. The method of Claim 1 wherein the first precursor ions are internal standard ions, and the second precursor ions are analyte precursor ions.

5. The method of Claim 1 further comprising applying a notched waveform to concurrently isolate the first precursor ions and the second precursor ions from any background ions.

6. The method of Claim 1 wherein the fragmenting is carried out using ion trap collision-induced dissociation (CID).

7. The method of Claim 1 wherein an RF amplitude is scanned from a first point to an endpoint to eject the first product ions to the detector.

8. The method of Claim 1 wherein an RF amplitude is scanned from a first point to another endpoint to eject the second product ions to the detector.

9. An ion trap mass spectrometer system for quantification of analytes in a sample, comprising:
a. an ion source configured so as to generate sample ions, the sample ions including first precursor ions having a first mass-to-charge ratio (m/z) and second precursor ions having a second m/z;
b. an ion trap mass analyzer positioned to receive the sample ions, the ion trap mass analyzer having a controller programmed to apply voltages to the ion trap mass analyzer to cause the ion trap mass analyzer to performs steps of: concurrently isolating the first precursor ions and the second precursor ions; and to fragment the first precursor ions, but not the second precursor ions, to generate first product ions.

10. The system of Claim 9 further comprising a notched waveform to concurrently isolate the first precursor ions and the second precursor ions from any background ions.

11. The system of Claim 9 wherein the fragmented first precursor ions and the fragmented second precursor ions are produced through collision-induced dissociation (CID).
